# FASCICULE DE BREVET EUROPEEN

(11) **EP 0 806 274 B1**
(45) Date de publication et mention de la délivrance du brevet: **23.10.2002**
(21) Numéro de dépôt: 97400879.9
(22) Date de dépôt: 18.04.1997
(51) Int. Cl.: B29C 45/14, B29C 45/16

(54) **Procédé d'habillage d'une pièce plastique par une feuille découpée au cours du procédé et pièce obtenue**
Verfahren zur Verkleidung eines Kunststoffteiles mit einer während des Verfahrens geschnittenen Folie und hergestellter Teil
Method for covering a plastic part by a sheet cut during the method and part so obtained

(30) Priorité: 10.05.1996 FR 9605858
(43) Date de publication de la demande: 12.11.1997
(73) Titulaire: ALLIBERT INDUSTRIE, 92000 Nanterre (FR)
(72) Inventeur: Bisognin, Julien, 60570 Andeville (FR); Baudouin, Ivan, 75019 Paris (FR); Trillat, Sébastien, 78300 Poissy (FR)
(74) Mandataire: Lerner, François

(56) Documents cités:
- EP-A- 0 592 768
- EP-A- 0 636 464
- EP-A- 0 684 120
- EP-A- 0 724 942
- US-A- 3 184 096

## Description

L'invention a pour objet un procédé d'habillage par au moins une feuille-décor non rigide d'essentiellement une face d'aspect d'une pièce-support en matière(s) plastique(s), dans un moule comprenant essentiellement une première et une deuxième parties réservant entre elles une cavité de moulage.

Il faut entendre par feuille non rigide, un matériau souple (PVC, tissu ou matériau non tissé,...) pouvant comporter une couche de mousse ou analogue, mais qui est déformable. La feuille pourra être formée uniquement dans le moule au cours du procédé de moulage de l'ensemble de la pièce ou avoir été déjà préformée préalablement afin qu'elle possède avant la mise en oeuvre du présent procédé une première forme proche de celle de la partie du moule avec laquelle elle va venir en contact.

L'invention concerne plus particulièrement la réalisation d'une pièce-finie comprenant un médaillon de décor ne couvrant qu'une partie de la face d'aspect. Les problèmes inhérents à ce type de réalisation consistent généralement à positionner correctement la feuille, à ne laisser apparaître sur la pièce finie qu'une partie déterminée de la feuille tout en permettant une cohésion satisfaisante entre la partie recouverte de la feuille d'aspect et la partie non recouverte.

Dans la suite, la partie visible de la feuille sur la pièce finie et appartenant à la face d'aspect sera dénommée médaillon. La partie de la pièce-support non revêtue par la feuille sera dite "non surmoulée" ou "non recouverte", tandis que la partie située "sous" le médaillon sera dite "surmoulée" ou "recouverte".

Pour résoudre les problèmes précités, l'invention propose un procédé selon la revendication 1 comprenant les étapes suivantes :
a) introduire la feuille dans le moule, entre deux éléments mobiles, ladite feuille comprenant une zone décor destinée à constituer le médaillon et une autre zone,
b) fermer au moins partiellement le moule par rapprochement de ses deux parties, de manière que la feuille crée une séparation continue de la cavité de moulage en un premier et un deuxième volumes,
c) amener au contact l'un de l'autre lesdits deux éléments pour découper à l'intérieur de la cavité de moulage au moins une ouverture dans la feuille à l'endroit de l'autre zone, de sorte que les premier et deuxième volumes de la cavité soient mis en communication fluide par cette ouverture qui rompt leur séparation dès ce moment, afin de permettre le passage à travers elle de la matière,
d) préalablement et/ou postérieurement aux étapes b) et/ou c), introduire de la matière plastique dans la cavité du moule,
e) postérieurement à l'étape c), répartir la matière dans la cavité de moulage en la faisant passer à travers l'ouverture, pour obtenir la pièce-support d'aspect localement revêtue dudit médaillon,
f) refroidir la pièce,
g) ouvrir le moule et éjecter la pièce finie.

Ainsi, les problèmes posés par l'effet de mèche et la cohésion entre les parties surmoulées et non surmoulées seront largement résolus. En effet, le nombre et la répartition des passages de matière à travers la structure de la feuille peuvent alors être contrôlés puisqu'ils correspondent aux endroits où la découpe est réalisée, autrement dit où les deux éléments sont amenés au contact l'un de l'autre. De plus, la découpe de la feuille étant réalisée dans la cavité de moulage et mettant en communication fluide les deux volumes dès qu'elle est réalisée, l'ouverture peut être positionnée précisément par rapport au moule.

Nous précisons qu'il est communément dénommé "effet de mèche", un phénomène consistant en une propagation d'humidité par capillarité le long de la feuille, en particulier le long des fibres lorsque la feuille est réalisée à base de fibres.

Certes, il est décrit dans EP-A-0 724 942 un procédé préconisant, pour faire passer de la matière à travers la feuille, de découper ladite feuille au voisinage de la cavité de moulage à l'aide d'une lame fixée sur l'une des parties du moule, mais aucune ouverture n'est créée dans la cavité mettant en communication les deux volumes dès réalisation de la découpe.

Il est également décrit dans EP-A-0724942, un autre procédé comprenant les étapes a), b), d), e), f) et g) précitées et préconisant pour réaliser la cohésion entre la partie recouverte et la partie non recouverte, de tendre la feuille au-dessus de cavités. Sous la pression exercée par la matière plastique, la feuille se rompt et passe à tavers l'ouverture ainsi créée dans la feuille.

EP-A-0684120 divulgue un procédé relativement proche consistant également à tendre la feuille au-dessus de cavités. Dès lors qu'aucune découpe de la feuille n'est prévue, la structure de cette feuille éclate alors sous la pression de la matière injectée dans la cavité de moulage.

Mais, tant en ce qui concerne EP-A-0 724 942 que EP-A-0 684120, lorsque la matière commence à passer à travers la structure de la feuille à certains endroits, on observe une chute de pression, ou du moins la pression marque un palier, si bien que les traversées restent locales. Les passages de matière ne peuvent alors être multipliés ou du moins exister en nombre suffisamment important. Par conséquent, cette solution s'avère complexe, tout en ne permettant qu'une cohésion limitée entre les parties recouverte et non recouverte, et en ne réduisant que faiblement "l'effet de mèche".

D'autre part, EP-A-0 636 464 enseigne de faire passer la matière plastique à travers les porosités de la feuille décor. Cette solution nécessite d'utiliser une feuille-décor de porosité élevée, ce qui risque entre autre problème de créer des passages de matière à travers la feuille à des endroits non désirés, en particulier de laisser apparaître la matière plastique injectée là où seule la feuille décor devrait être visible.

Il est à noter que l'invention vise à résoudre les problèmes précités quelle que soit la position relative de la partie recouverte et de la partie non recouverte. En particulier, ces deux parties pourront être côte-à-côte, la partie recouverte pourra entourer la partie non recouverte ou inversement. Elles pourront également se trouver dans une configuration correspondant à une combinaison de ces possibilités.

Par ailleurs, afin d'obtenir un aspect satisfaisant de la pièce finie, en particulier dans la partie non recouverte, l'invention propose que, lors de l'étape d) et de préférence aussi pendant l'étape e), on injecte sous pression la matière plastique dans la cavité de moulage.

La pièce finie est alors obtenue directement, sans nécessiter de reprendre la pièce lors d'une opération de moulage supplémentaire pour réaliser la partie non recouverte avec un aspect satisfaisant.

Afin de réduire le risque de défaut d'aspect sur la pièce finie, l'invention propose même qu'avantageusement :
- lors de l'étape d), on réalise une première injection sous pression de la matière plastique en regard d'un côté de ladite zone décor, se sorte que la zone décor de la feuille est amenée en appui contre l'une desdites parties du moule destinée à la recevoir,
- lors de l'étape e), on poursuit la première injection de matière plastique pour faire passer la matière plastique à travers les ouvertures et on réalise une autre injection sous pression de matière plastique à l'extérieur de la zone décor.

L'injection de la matière d'abord "sous" (c'est-à-dire en regard de) la zone décor, permet de mettre en place la feuille en la mettant en forme dans la cavité de moulage. La seconde injection constitue une reprise du flux issu de la première injection. Ceci permet d'améliorer l'aspect de la partie non recouverte et de réaliser des parties non recouvertes plus vastes. De plus, la seconde injection peut s'effectuer à une pression plus élevée (de préférence 20 à 40 MPa selon la matière) dans cette partie non recouverte où le médaillon n'est pas présent, tandis que la pression de la première injection sera plus modérée (de préférence de quelques MPa à 20 MPa).

Selon une autre caractéristique de l'invention, la zone décor est, dudit côté d'injection, presque entièrement nappée de matière plastique avant la découpe de la feuille lors de l'étape c). De ce fait, avant découpe la zone décor pourra être maintenue grâce à l'autre zone, en particulier sa tension pourra être contrôlée, ce qui permettra d'obtenir une bonne mise en forme de la zone décor. Le nappage presque complet de la zone décor permettra de figer cette mise en forme, évitant alors que la zone décor de la feuille ne se déforme après découpe.

Afin de réaliser une partie non recouverte entourée d'une partie recouverte, l'invention propose que :
- la première partie du moule comprenne au moins deux éléments,
- on réalise un évidement (trou à contour fermé) dans la feuille,
- on introduise lors de l'étape a) une zone de la feuille définissant le pourtour de cet évidement entre les deux éléments de la première partie du moule où la feuille est maintenue.

Afin d'améliorer encore le processus d'obtention de la pièce, notamment le positionnement de l'ouverture dans la cavité de moulage, l'invention prévoit qu'avantageusement :
- la première partie du moule comprenne au moins deux éléments,
- on introduise lors. de l'étape a) une zone de la feuille extérieure à la zone décor entre les deux éléments de la première partie du moule,
- la fermeture du moule lors de l'étape b) ne soit que partielle, la fermeture totale du moule étant réalisée lors de l'étape c) et engendrant la découpe de la feuille par pression entre le premier et le deuxième élément de la première partie du moule.

L'ouverture n'est alors réalisée que lorsque la mise en forme de la feuille et en particulier de la zone décor au cours de la fermeture du moule est achevée. Dès lors, le risque que l'ouverture se déplace dans la cavité de moulage et se retrouve sur la face d'aspect est considérablement réduit.

Afin d'améliorer encore la réalisation de l'ouverture dans la feuille, l'invention propose que l'on dispose la feuille à l'étape b) entre deux éléments d'un dispositif emporte-pièce et lors de l'étape c), on réalise instantanément à travers la feuille une ouverture en amenant au contact l'un de l'autre les deux éléments du dispositif emporte-pièce.

L'ouverture est ainsi aisément réalisée, avec un positionnement précis, de manière fiable et rapide, ce qui raccourcit le temps d'obtention de la pièce.

Afin d'augmenter la diversité des pièces réalisées, l'invention propose que l'on maintienne les deux éléments du dispositif emporte-pièce au contact l'un de l'autre jusqu'à l'étape f). On réalise ainsi une pièce finie présentant un passage dont on détermine la forme à partir de celle de l'emporte-pièce.

Afin d'éviter que des parties de la feuille apparaissent sur la face d'aspect de la pièce finie dans sa partie non surmoulée, l'invention propose qu'après l'étape c) l'on contrôle l'injection en regard de la zone décor et à l'extérieur de ladite zone décor pour qu'au cours desdites première et deuxième étapes d'injection, des efforts opposés soient appliqués par de la matière de part et d'autre de l'autre zone, évitant ainsi qu'elle apparaisse sur la face d'aspect de la pièce finie. En contrôlant le(s) flux de matière(s), on pourra éviter que l'ouverture ne se déplace en direction de la face d'aspect.

L'invention propose comme solution complémentaire ou alternative qu'après l'étape c), on crée à proximité immédiate de l'ouverture découpée dans la feuille, un effet de tourbillon ou de retenue du flux de la matière injectée dans le premier volume à l'encontre de son déplacement naturel vers la périphérie du deuxième volume pour éviter que l'autre zone de la feuille n'apparaisse sur la face d'aspect.

Les deux solutions cités précédemment seront d'autant plus intéressantes que, pour éviter un effet de mèche, la feuille étant retenue sur le moule dans une zone de maintien de la feuille extérieure à la zone décor préalablement à l'étape c), on découpe continûment la feuille lors de l'étape c) pour séparer la zone décor et la zone de maintien. En effet, si ces zones sont totalement séparées, tout effet de mèche devient impossible.

Si le problème de l'effet de mèche n'est pas primordial, l'invention propose qu'à partir de l'étape b), l'on retienne la feuille sur le moule dans une zone de maintien de la feuille extérieure à la zone décor et lors de l'étape c) on découpe la feuille de façon discontinue de sorte que la feuille est retenue au moins jusqu'à l'étape f). La maîtrise des déplacements de la feuille et donc la qualité d'aspect du médaillon sur la pièce finie en sont ainsi améliorées. Cette solution permet en outre d'empêcher que la découpe se retrouve sur la face d'aspect.

En particulier, selon une caractéristique avantageuse de l'invention, après l'étape c) on retient totalement la zone de maintien de la feuille de sorte que son déplacement est interdit.

L'invention a en outre pour objet une pièce finie obtenue par la mise en oeuvre du procédé. Selon l'invention, elle comprend une partie recouverte où une feuille-décor non rigide recouvre une face d'aspect d'une pièce-support en matière plastique et une partie non recouverte où la feuille décor est absente de la face d'aspect, et la partie recouverte entoure complètement la partie non recouverte.

Cette configuration permet avec celles précédemment connues de réaliser des pièces présentant presque toutes les dispositions relatives possibles entre les parties recouverte et non recouverte.

L'invention va apparaître encore plus clairement dans la description qui va suivre, faite en référence aux dessins annexés dans lesquels:
- la figure 1 montre en coupe un moule conforme à l'invention lors d'une première étape du procédé,
- la figure 2 montre en coupe un moule conforme à l'invention lors d'une deuxième étape du procédé,
- la figure 3 montre en coupe un moule conforme à l'invention lors d'une troisième étape du procédé,
- la figure 4 montre à plus grande échelle le détail repéré IV sur la figure 3, lors d'une étape antérieure à celle de la figure 3,
- la figure 5 montre à la même échelle le détail repéré IV sur la figure 3 à la même étape que celle de la figure 3,
- la figure 6 montre toujours à la même échelle le détail repéré IV sur la figure 3, lors d'une étape ultérieure du procédé,
- la figure 7 est une vue en coupe selon la ligne VII-VII de la figure 6,
- les figures 8 et 9 représentent des variantes de réalisation du moule dans la partie de détail repérée IV sur la figure 3,
- la figure 10 représente en plan la feuille utilisée aux figures 11 à 13,
- la figure 11 montre une variante de moule lors d'une première étape du procédé,
- la figure 12 montre le moule de la figure 11 lors d'une deuxième étape du procédé,
- la figure 13 montre à échelle agrandie le détail repéré XIII sur la figure 12, lors d'une troisième étape du procédé,
- les figures 14 et 15 illustrent une autre variante de moule lors de deux étapes successives du procédé,
- la figure 16 illustre à échelle agrandie le détail repéré XVI sur la figure 15, lors d'une troisième étape du procédé,
- les figures 17 à 22 illustent en plan différentes pièces obtenues selon le procédé de l'invention.

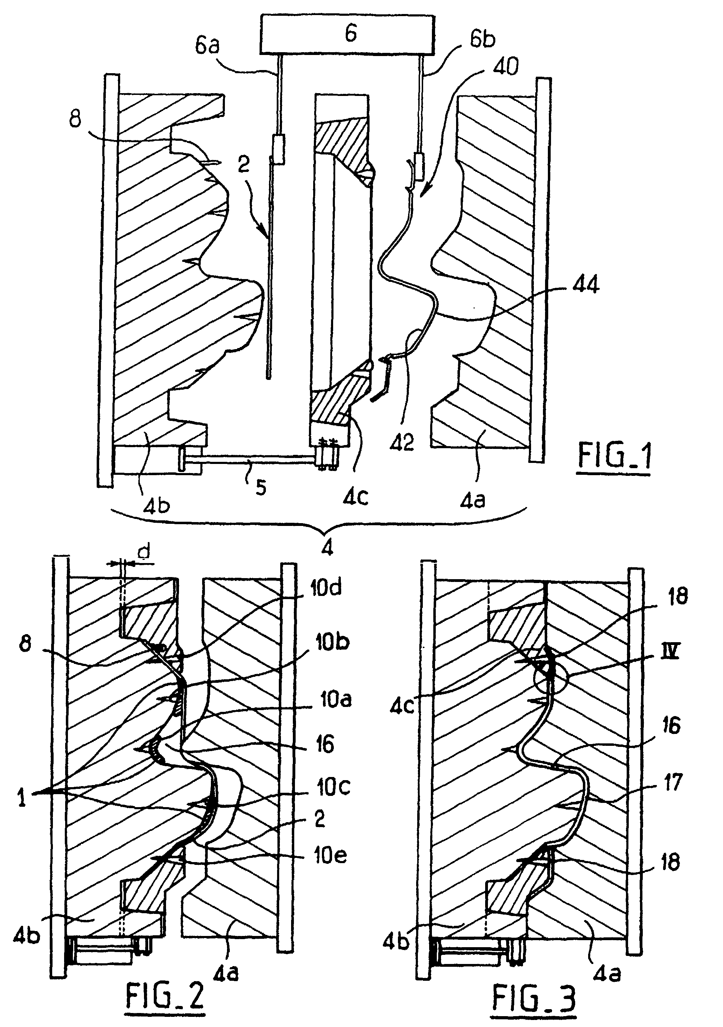

Sur les figures 1 à 3, on voit illustré un moule 4 comprenant une première partie mobile 4a et une deuxième partie constituée d'une partie fixe 4b et d'une lunette 4c (bloc en forme de cadre). Ici, la lunette 4c est liée à la partie fixe 4b par des vérins 5. La lunette pourrait toutefois en alternative être liée structurellement à la partie mobile 4a du moule par l'intermédiaire de vérins ou analogue.

A la figure 1, le moule 4 est en position ouverte - la partie mobile 4a et la partie fixe 4b sont largement distantes l'une de l'autre - et la lunette est sortie - non en appui sur la partie fixe -.

Une feuille 2 est mise en place entre la partie fixe 4b et la lunette 4c par un premier bras 6a d'un robot 6. La feuille est alors fixée sur des clous 8 en partie haute ou par tout autre moyen de maintien. Le reste de la feuille se positionne alors par gravité, étant entendu que le plan de coupe est vertical.

A la figure 2, la lunette est partiellement fermée. Une distance d subsiste malgré tout entre la lunette 4c et la partie fixe 4b du moule. Les moyens de maintien de la feuille constitués notamment par les clous 8 et le pincement de la feuille entre la lunette 4c et la partie fixe 4b du moule sont alors actifs, c'est-à-dire qu'ils retiennent une zone marginale périphérique de maintien 2a de la feuille 2. Toutefois, la fermeture de la lunette n'étant que partielle, la feuille n'est pas complètement immobilisée, c'est-à-dire qu'elle peut glisser par rapport aux moyens de maintien. La tension de la feuille 2 est ainsi maîtrisée.

De la matière thermoplastique 1, destinée à servir de support à la pièce finie, est alors injectée depuis la partie fixe 4b du moule dans un volume intérieur 16 situé sous la feuille 2. Au cours du remplissage du volume 16, le moule 4 est progressivement fermé par rapprochement des deux parties 4a, 4b, de telle manière que l'on obtienne une injection-compression de la matière 1.

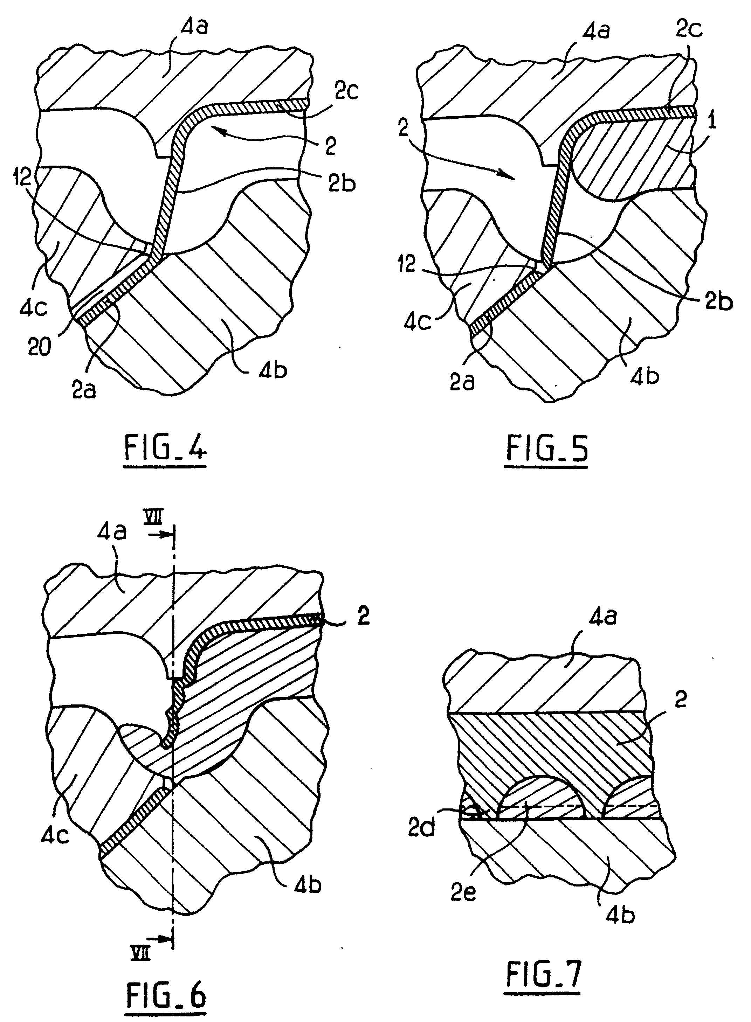

A la fin de la phase d'injection-compression, la partie mobile 4a du moule vient en appui contre la lunette 4c. A la figure 4, on s'aperçoit que le moule 4 et en particulier la lunette 4c n'est pas alors complètement fermée-la distance d sépare toujours la lunette 4c de la partie fixe 4b -. Il subsiste un espace 20 autour de la feuille 2, entre la lunette 4c et la partie fixe 4b. Ainsi, bien que la feuille soit maintenue, un glissement contrôlé de celle-ci est toujours possible entre la lunette et la partie 4b.

Lorsque le volume 16 est complètement ou presque entièrement rempli, tel qu'illustré en figure 5, une zone centrale 2c de la feuille 2 destinée à apparaître sur la face d'aspect de la pièce finie pour y constituer le médaillon est appliquée par la matière thermoplastique 1 contre la partie mobile 4a située en regard du premier volume 16. La zone centrale 2c est entourée par une zone de raccordement 2b, elle-même entourée par la zone périphérique de maintien 2a, le tout constituant la feuille 2.

Le moule présente une cavité 17 comportant le volume 16 et un volume extérieur 18 entourant le volume 16. Ces deux volumes sont ici séparés par la zone de raccordement 2b de la feuille-décor.

Le remplissage du volume 16 peut être détecté par mesure du volume de matière injecté, de l'ouverture du moule ou à l'aide de capteurs d'événement (capteur de pression, de flux thermique, de température, optique ou analogue). Lorsque le volume 16 est presque rempli, la fermeture du moule est alors commandée et les parties fixe 4b et mobile 4a se rapprochent encore l'une de l'autre.

Sur les figures 3 et 5, le moule est complètement fermé, le rapprochement entre les parties 4a et 4b ayant engendré la fermeture de la lunette 4c qui est maintenant en contact de la partie fixe 4b. Les formes des parties du moule, ainsi que celles de la lunette 4c sont en effet étudiées pour qu'au cours de son mouvement de rapprochement vers la partie fixe 4b, la partie mobile 4a vienne en appui contre la lunette 4c pour la pousser jusqu'à ce qu'elle vienne en contact de la partie 4b.

La lunette 4c possède une partie saillante 12 formant une arrête vive tel qu'un "bec de perroquet". Ce bec de perroquet vient sectionner, à la limite de la zone de raccordement 2b et de la zone périphérique de maintien 2a, la feuille 2 sous l'effet de la pression de fermeture totale du moule 4. L'important est de réaliser une découpe de la feuille 2 au moins au niveau de la zone de raccordement 2b, c'est-à-dire à l'intérieur ou en limite de la cavité de moulage afin de mettre en communication les volumes 16 et 18.

Sur les figures 6 et 7, la découpe de la feuille 2 n'est que partielle. La zone de raccordement 2b, et donc la zone centrale, sont ainsi maintenues puisque toujours liés par des tronçons 2d à la zone de maintien 2a. La fermeture totale du moule empêche le glissement de la zone de maintien 2a entre la lunette 4c et la partie fixe 4b du moule. La zone de raccordement 2b ne risque donc pas de venir s'appliquer contre la partie mobile 4a du moule, et d'apparaître sur la face d'aspect de la pièce finie.

Les découpes 2e quant à elles permettent de mettre en communication le volume 16 et le volume extérieur 18, dès qu'elles sont réalisées. L'écoulement de matière peut ainsi se poursuivre du volume 16 recouvert du médaillon vers le volume 18 où la face d'aspect de la pièce finie ne sera pas recouverte.

L'injection de matière 1 s'effectue par l'intermédiaire de buses 10a, 10b, 10c, 10d et 10e et de manière progressive depuis le centre de la zone centrale 2c jusqu'à la périphérie de celle-ci, puis jusqu'à la périphérie de la partie non recouverte de la pièce après avoir réalisé les découpes 2e dans la feuille. Le volume 16 sera ainsi rempli en premier à l'aide des buses 10a, puis 10b et 10c tandis que le volume 18 sera rempli par la suite à l'aide des buses 10d et 10e.

Cette injection séquentielle est obtenue à l'aide de capteurs précédemment évoqués -tels notamment que des capteurs d'événements -, l'injection à partir d'une buse étant commandée lorsque le front de matière injectée arrive à son niveau. Ce front de matière est commandé pour être en permanence en déplacement vers le pourtour de la cavité 17 et éviter ainsi la présence de lignes de soudure visibles sur la pièce finie.

De plus, la pression d'injection de la matière 1 sera avantageusement plus élevée en fin de remplissage, notamment lorsque celle-ci ne sort plus que par les buses 10c et 10d situées dans le volume 18. Ainsi, on améliore les qualités d'aspect de la face non recouverte - plus la pression est élevée meilleure est la qualité d'aspect de la pièce finie, et notamment moins visibles sont les lignes de soudure -, sans risquer de détériorer le médaillon par une pression d'injection trop élevée.

La pièce finie 40 est illustrée en figure 1 saisie par un deuxième bras 6b du robot 6. Son support 42 composé par la matière thermoplastique 1 étant durci, la pièce finie 40 est démoulée par écartement des deux parties du moule. Sur cette figure, les moyens de découpe finale de la feuille 2 permettant de séparer la zone de maintien 2a de la pièce finie 40 n'ont pas été représentés.

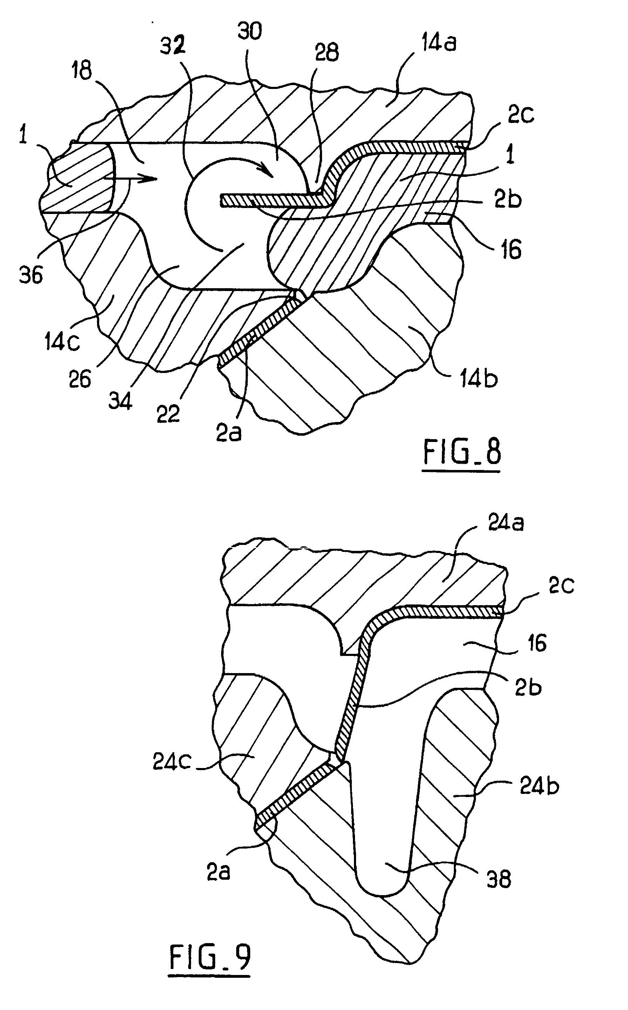

La figure 8 présente une variante où la découpe de la zone de raccordement 2b réalisée à l'aide du "bec de perroquet" 22 est complète. (Toutefois, cette découpe pourrait être partielle - telle qu'illustré aux figures 6 et 7.)

Le risque que la zone centrale 2c se déplace est réduit par le fait que la matière 1 étant injecté - notamment par injection séquentielle - d'abord sous le médaillon, elle s'est déjà refroidie dans cette zone et a "durcie" lorsque la feuille est découpée, c'est-à-dire sensiblement lorsque le front de matière arrive dans le volume 18. Ceci contribue à maintenir le médaillon et empêcher qu'il se déplace.

Par contre, la zone de raccordement 2b n'étant plus maintenue par l'intermédiaire de la zone de maintien 2a, il faut alors empêcher qu'elle puisse apparaître sur la face d'aspect de la pièce finie. Pour ce faire, la partie mobile 14a du moule possède une nervure 28 contre laquelle le bord de la zone centrale 2c vient en appui dans le volume 16, cette nervure créant un décrochement 30 dans le volume 18. La limite entre les volumes 16 et 18 sera désormais définie par une ligne imaginaire reliant la nervure 28 et le bec de perroquet 22.

La partie fixe 4b possède, elle aussi, un décrochement 26 tel que le volume 18 possède une zone élargie 34 limitée par les décrochements 26 et 30. La zone élargie 34 est d'une longueur légèrement supérieure à longueur de la zone de raccordement 2b de la feuille.

Grâce à cela, la zone de raccordement 2b va être empêchée de venir sur la face d'aspect, et ce pour deux raisons :

D'une part, la matière 1 provenant du volume 16 vient buter contre le décrochement 26 et prend un mouvement tourbillonnaire illustré par la flèche 32 de sorte qu'elle passe derrière la zone de raccordement 2b pour l'englober et la noyer, jusqu'au niveau de la nervure 28. Cette rainure 28 empêche la matière 1 de s'immiscer entre le médaillon 2c et la partie mobile 14a du moule.

D'autre part, si on injecte de la matière 1 dans le volume 18 extérieurement à la zone élargie 34, dès que le moule est complètement fermé, (c'est-à-dire dès que la feuille est découpée), le flux de matière issu du volume 18 va progresser dans la direction de la flèche 36 jusqu'au décrochement 30 et se positionner entre la partie mobile 14a du moule et la zone de raccordement 2b. Cette zone de raccordement 2b va être noyée dans la matière plastique, entre les flux de matière 1 issus des volumes 16 et 18. La ligne de soudure créée par la rencontre des deux flux ne sera pas ici gênante puisqu'elle n'apparaîtra pas sur la face d'aspect.

De plus, les flux de matière issus des volumes 16 et 18 appliquent ainsi sur la feuille des efforts qui sont opposés. Les contraintes subies par la feuille et tendant à la déplacer vers la face d'aspect sont ainsi réduites.

La figure 9 montre une cavité secondaire 38 communiquant avec la cavité générale de moulage et réalisée dans la partie fixe 24b du moule. La partie mobile du moule 24a et la lunette 24c pourront être celles illustrées précédemment. La découpe de la feuille pourra être partielle ou complète.

Cette cavité 38 est réalisée en bordure du volume 16 et sert de "masselotte", c'est-à-dire de réservoir de "trop plein" de matière. Lors de l'injection de la matière 1 dans le volume 16, ladite matière s'étend autour des points d'injection 10a, 10b, 10c. Ainsi, la zone de raccordement 2b risque d'être imprégnée de matière à certains endroits avant d'autres. Or, il faut attendre que la zone centrale 2c soit presque entièrement nappée de matière thermoplastique pour découper la feuille. Alors, l'accumulation de matière engendre une augmentation de la pression de la matière produisant des passages de matière à travers la zone de raccordement.

La cavité secondaire 38 crée un dégagement pour la matière en attendant la découpe de la feuille et évite ainsi le passage de matière en empêchant que celle-ci soit comprimée par accumulation dans une partie du volume d'injection. Elle permet donc de pondérer les écarts de remplissage du volume 16. En fin d'injection, la cavité 38 est entièrement remplie de matière.

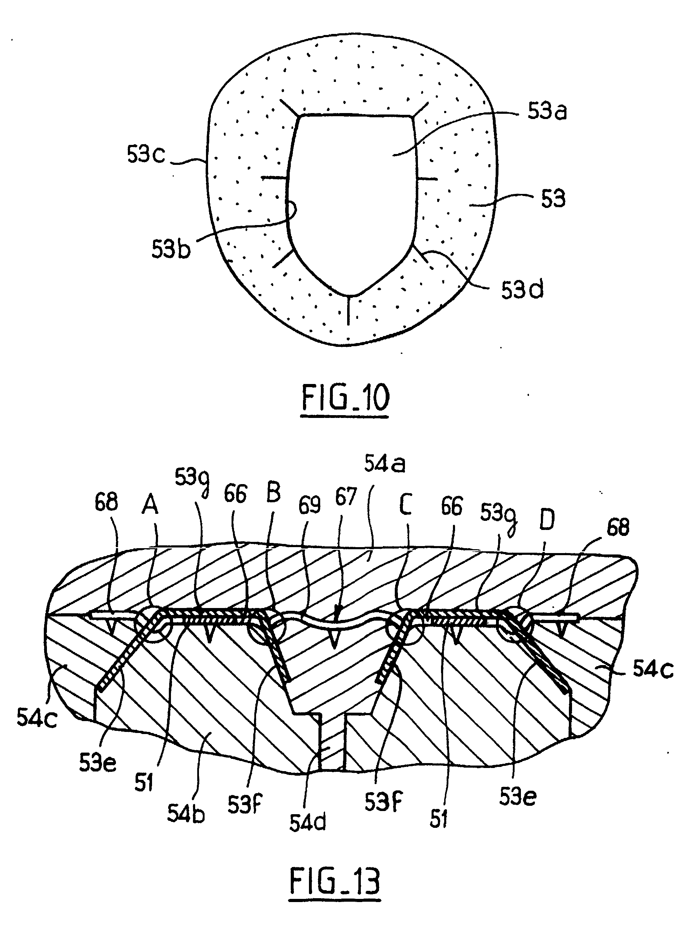

Les figures 10 à 13 illustrent une variante permettant de réaliser une partie non-recouverte d'une feuille décor entièrement entourée par une partie recouverte d'une feuille décor. Sur ces figures les éléments correspondant à ceux des figures précédentes ont été repérés par un nombre augmenté de 50.

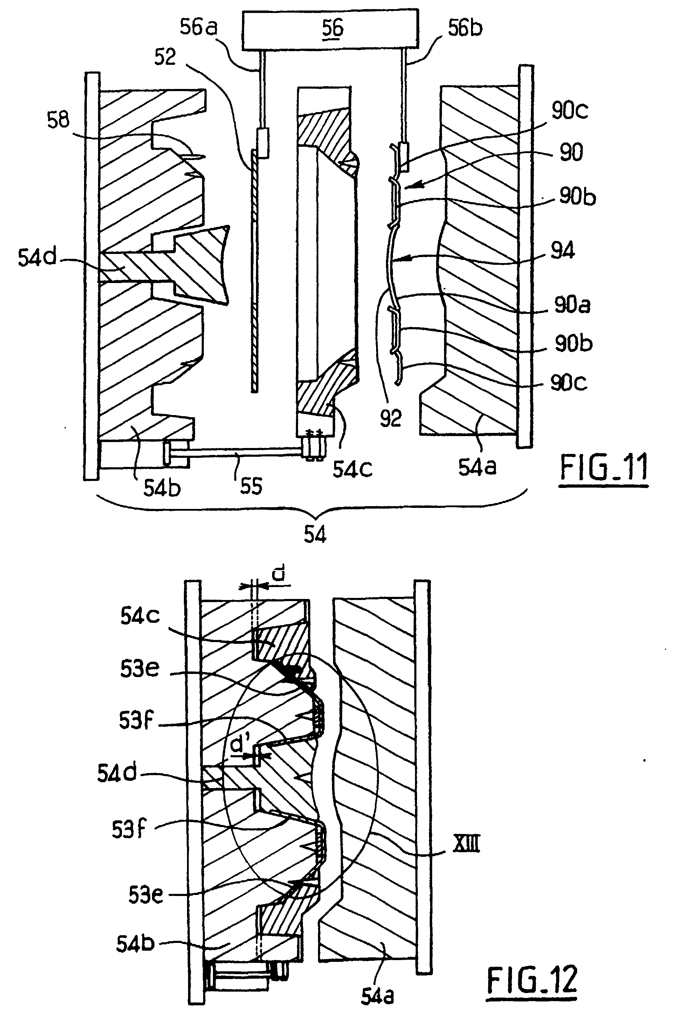

A la figure 11, le moule 54 ne diffère essentiellement du moule 4 qu'en ce que la partie fixe 54b comprend un noyau 54d mobile actionné par un vérin (non représenté). Le robot 56 introduit une feuille 53 dans le moule entre la partie mobile 54b et la lunette 54c.

Cette feuille 53 est illustrée plus précisément à la figure 10. Elle présente un évidement 53a de sorte qu'elle forme une sorte de couronne comprise entre un bord intérieur 53b délimitant l'évidement et un bord extérieur 53c. Autour de l'évidement la feuille 53 présente des entailles 53d. s'étendant radialement dans la feuille à partir du bord 53b.

Le robot fixe la feuille en partie haute sur les clous 58. Le noyau 54d est alors inséré à travers l'évidement 53a de la feuille 53. Le noyau 54d est ensuite fermé en le rapprochant de la partie fixe 54b du moule, de telle sorte qu'une zone intérieure périphérique de maintien 53f et en particulier le bord intérieur 53a de la feuille soit disposée entre le noyau 54d et la partie fixe 54b du moule.

Tel qu'illustré à la figure 12, au cours de la fermeture du noyau 54d, on retient la zone intérieure 53f par rapport au noyau 54d, la zone intérieure 53f se déplace alors en suivant sensiblement le mouvement du noyau 54d. Ainsi, les entailles 53d vont se retrouver entre le noyau 54d et la partie fixe 54b du moule. Par conséquent, les entailles 53d facilitent la mise en place de la feuille, elles évitent que la feuille 53 fronce lorsqu'on la place entre le noyau 54d et la partie fixe 54b, et ne risque pas d'être visibles sur la pièce finie.

La fermeture de la lunette 54c s'effectue tel qu'il a été décrit précédemment en relation avec la lunette 4c, sensiblement simultanément à la fermeture du noyau 54d. Une zone extérieure périphérique de maintien 53e et en particulier le bord extérieur 53c sont disposés entre la lunette 54c et la partie fixe 54b. On pourra retenir plus ou moins la zone extérieure 53e par rapport à la lunette 54c, tel qu'il a été décrit en relation avec le noyau 54d, afin d'appliquer la tension souhaitée à la feuille 53.

Le noyau 54d n'est alors que partiellement fermé, de même que pour la lunette 54c, il subsiste une distance d' (sensiblement égale à d) entre lui et la partie fixe 54b.

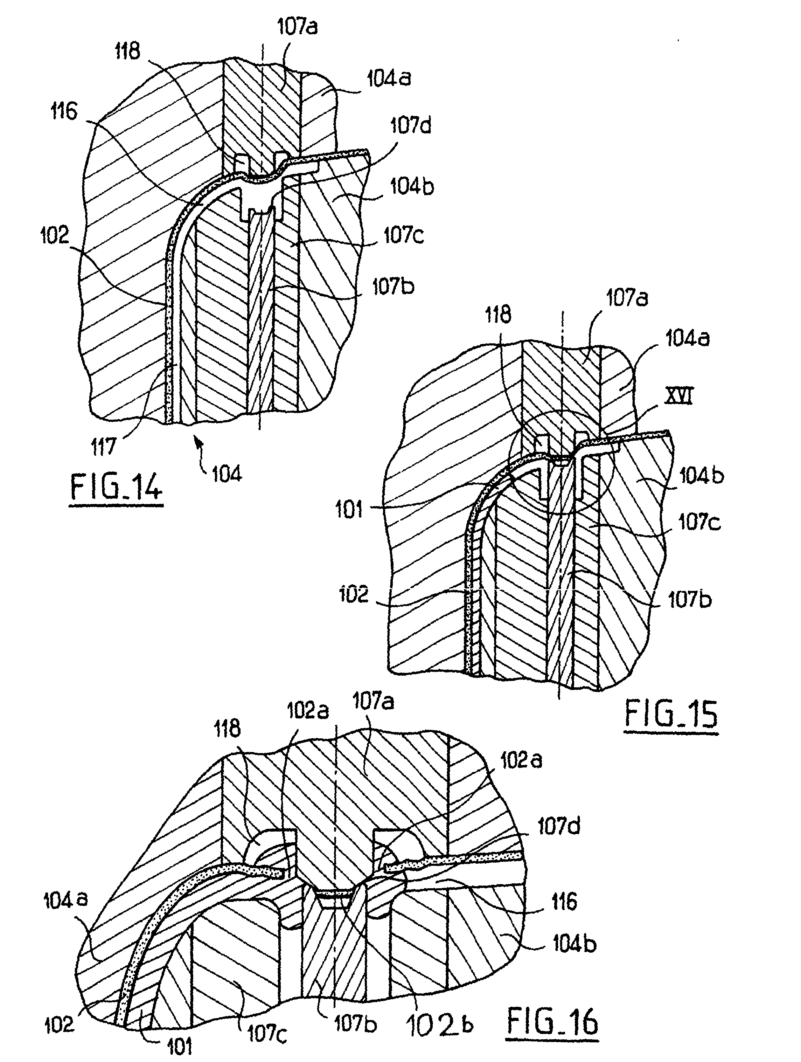

La cavité de moulage 67 présente alors trois volumes 66, 68 et 69 continûment séparés par la feuille 53, tel qu'illustré à la figure 13. La matière plastique 51 est alors injectée dans le volume 66 amenant une zone décor 53g de la feuille en appui contre la partie mobile 54a du moule. On comprend alors que la situation dans les zones repérées A et D correspondent à ce qui a été décrit précédemment en relation avec le détail IV. On comprend également que les zones repérées B et C sont similaires aux zones repérées respectivement D et A, le noyau 54d jouant alors un rôle similaire à celui de la lunette 54c. Les étapes ultérieures permettant d'obtenir la pièce finie 90 étant par conséquent à celles déjà décrites, elles ne seront pas à nouveau explicitées.

Tel qu'illustré à la figure 11, la pièce finie 90 présente une face d'aspect 94 et comprend une pièce-support 92 en matière plastique recouverte de la feuille décor 53 dans la partie 90b de la pièce, laquelle entoure la partie non recouverte 90a et est entourée par la partie non recouverte 90c.

Les figures 14 à 16 illustrent une variante pour réaliser une ouverture dans une feuille. Sur ces figures, un moule 104 présente une partie fixe 104b et une partie mobile 104a, entre lesquelles est ménagée une cavité de moulage 117. Les deux parties du moules sont au moins partiellement fermées. Une feuille 102 est disposée entre ces deux parties du moule et notamment dans la cavité de moulage 117.

Une enclume 107a est disposée à l'intérieur de la partie mobile 104a et en limite de la cavité de moulage 117. Un marteau 107b présentant une partie coupante 107d est disposée à l'intérieur de la partie fixe 104b, en limite de la cavité de moulage 117 et en regard de l'enclume 107a. Le marteau 107b coulisse par rapport à la partie fixe 104b. Afin de réduire l'usure de la partie fixe 104b, un coulisseau 107c est interposé entre la partie fixe 104b et le marteau 107b. L'ensemble formé par le marteau 107b et l'enclume 107a forme un dispositif emporte-pièce, c'est-à-dire que le rapprochement du marteau 107b et de l'enclume 107a provoque la découpe de la feuille 102 lorsqu'elle est disposée entre eux.

La feuille sépare continûment la cavité de moulage 117 en une première cavité 116 en limite de laquelle est disposé le marteau 107b et une deuxième cavité 118 en limite de laquelle est disposée l'enclume 107a.

A la figure 15, la mise en contact de la partie saillante 107d du marteau 107b et de l'enclume 107a provoque une ouverture 102a (illustrée à la figure 16) dans la feuille 102 mettant immédiatement en communication fluide les volumes 16 et 18. Cette ouverture entoure une zone détourée 102b de la feuille. Le contact entre le marteau et l'enclume s'effectue avantageusement suivant une ligne discontinue. Ainsi, la découpe est discontinue, et forme une ouverture 102a formé par une multitude de passage à travers la feuille 102. La découpe pourrait toutefois être continue.

Tel qu'illustré à la figure 16, le marteau 107b et l'enclume 107a sont ensuite maintenus au contact l'un de l'autre lors de l'injection de matière plastique 101 dans les volumes 116 et 118 et jusqu'au refroidissement de la pièce. Ainsi, la matière plastique 101 est absente en regard et de part et d'autre de la zone détourée 102b de la feuille.

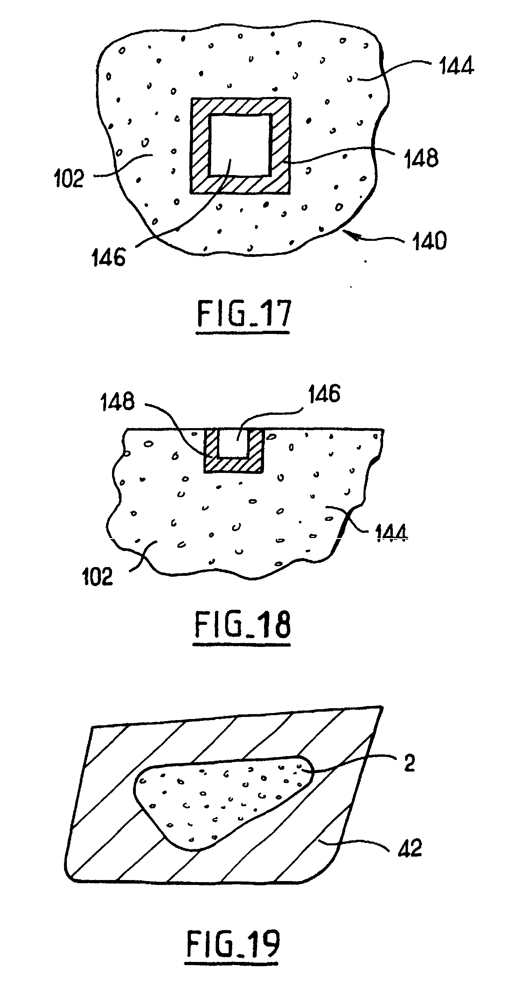

Après refroidissement, il est alors aisé de retirer la zone détourée 102b de la feuille créant ainsi un passage (trou) 146 traversant de part en part la pièce finie 140, illustrée à la figure 17. Le bord de ce passage présentera un bel aspect du côté de la face d'aspect 144, puisqu'il présentera l'aspect d'une collerette 148 de matière plastique masquant la découpe de la feuille.

En variante, on pourrait prévoir de décaler ou de déplacer l'enclume 107a et le marteau 107b après découpe de la feuille, afin qu'ils permettent de noyer la zone détourée 102b dans la matière plastique. Ceci permettrait d'obtenir une pièce finie composée d'une partie surmoulée et d'une partie non surmoulée et dépourvue de passage la traversant.

On comprend aisément que l'invention permet d'obtenir la pièce finie illustrée à la figure 18, puisqu'elle ne diffère de celle illustrée à la figure 17 qu'en ce que le passage 146 est réalisé au bord de la pièce finie.

La figure 19 représente la face d'aspect de la pièce 40 de la figure 1, la feuille décor 2 étant entièrement entourée par la partie non recouverte du support 42.

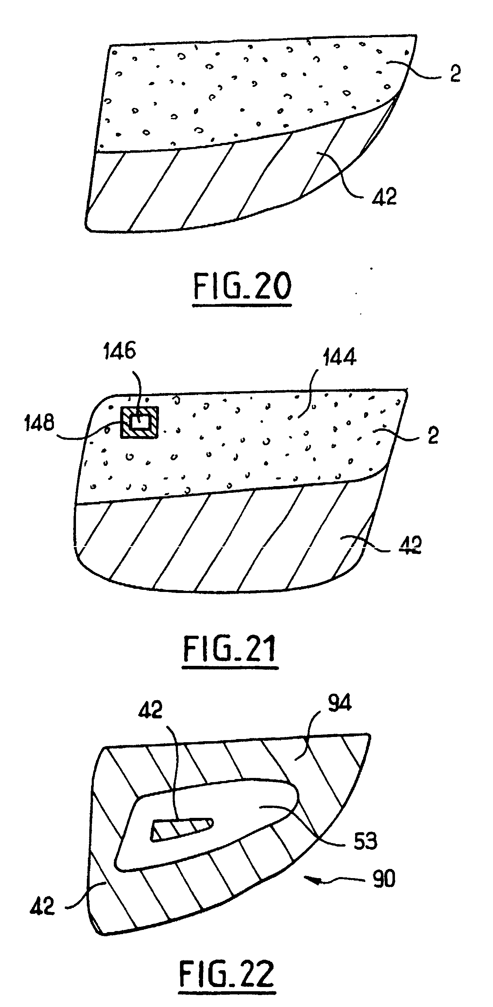

La figure 20 illustre une variante de la figure 19 que permet également d'obtenir le procédé de l'invention. Les parties recouverte et non recouverte sont alors côte à côte.

La figure 21 présente une pièce comprenant une partie support 42 non recouverte et une partie recouverte d'une feuille décor 2. La partie recouverte comprend un passage 146 entourée d'une collerette 148 en matière plastique réalisée sur la face d'aspect 144. Il s'agit en quelque sorte d'une combinaison de ce qui est illustré aux figures 17 et 20.

La figure 22 représente la face d'aspect 94 de la pièce finie 90 de la figure 11. La feuille décor 53 entoure une partie non recouverte du support 42 et est entourée par une autre partie non recouverte du support.

Bien entendu, l'invention n'est nullement limitée aux modes de réalisation décrits ci-dessus. Ainsi, on pourrait prévoir de lier structurellement la lunette à la partie mobile du moule, sans que cela modifie le procédé d'obtention de la pièce finie. En particulier, on pourra considérer que la lunette et la partie fixe du moule sont fonctionnellement liées.

On pourrait également préformer la feuille afin de lui donner une rigidité supérieure et/ou une préforme facilitant la mise en place de la feuille dans le moule - voir notamment GB-A-2271956 -, par exemple par emboîtage.

## Revendications

1. Procédé d'habillage par au moins une feuille-décor (2, 53, 102) non rigide d'essentiellement une face d'aspect (44, 94, 144) d'une pièce-support (42, 92) en matière(s) plastique(s) (1 ; 51 ; 101), dans un moule (4, 54, 104) comprenant essentiellement une première (4b, 4c ; 54b, 54c, 54d ; 104b) et une deuxième parties (4a ; 54a ; 104a) réservant entre elles une cavité (17 ; 67 ; 117) de moulage, la première partie du moule comprenant également deux éléments (4b, 4c ; 54b, 54c ; 54b, 54d) mobiles l'un par rapport à l'autre destinés à découper la feuille-décor en venant au contact l'un de l'autre, pour obtenir une pièce finie (40; 90; 140) comprenant un médaillon de décor, ledit procédé comprenant les étapes suivantes :
a) introduire la feuille dans le moule, entre lesdits éléments mobiles, ladite feuille comprenant une zone décor (2c; 53g) destinée à constituer le médaillon et une autre zone,
b) fermer au moins partiellement le moule par rapprochement de ses deux parties, de manière que la feuille crée une séparation continue de la cavité de moulage en un premier (16 ; 66; 116) et un deuxième volumes (18 ; 68,69;118),
c) amener au contact l'un de l'autre lesdits deux éléments pour découper à l'intérieur de la cavité de moulage au moins une ouverture dans la feuille à l'endroit de l'autre zone, de sorte que les premier et deuxième volumes de la cavité soient mis en communication fluide par cette ouverture qui rompt leur séparation dès ce moment, afin de permettre le passage à travers elle de la matière,
d) préalablement et/ou postérieurement aux étapes b) et/ou c), introduire de la matière plastique dans la cavité du moule,
e) postérieurement à l'étape c), répartir la matière dans la cavité de moulage en la faisant passer à travers l'ouverture, pour obtenir ladite pièce-support d'aspect localement revêtue dudit médaillon,
f) refroidir la pièce,
g) ouvrir le moule et éjecter la pièce finie.

2. Procédé selon la revendication 1, **caractérisé en ce que** lors de l'étape d), on injecte sous pression la matière plastique dans la cavité de moulage.

3. Procédé selon la revendication 2, **caractérisé en ce que** :
- lors de l'étape d), on réalise une première injection sous pression de la matière plastique en regard d'un côté de ladite zone décor, de sorte que la zone décor de la feuille est amenée en appui contre l'une desdites parties du moule destinée à la recevoir,
- lors de l'étape e), on poursuit la première injection de matière plastique pour faire passer la matière plastique à travers les ouvertures et on réalise une autre injection sous pression de matière plastique à l'extérieur de la zone décor.

4. Procédé selon la revendication 3, **caractérisé en ce que** la zone décor (2c) est, dudit côté d'injection, presque entièrement nappée de matière plastique avant la découpe de la feuille lors de l'étape c).

5. Procédé selon la revendication 3 ou 4, **caractérisé en ce qu'**après l'étape c) l'on contrôle l'injection en regard de la zone décor et à l'extérieur de ladite zone décor pour qu'au cours desdites première et deuxième étape d'injection, des efforts opposés soient appliqués par de la matière de part et d'autre de l'autre zone, évitant ainsi qu'elle apparaisse sur la face d'aspect de la pièce finie.

6. Procédé selon l'une quelconque des revendications précédentes, **caractérisé en ce que** :
- la première partie du moule comprend au moins deux éléments (54b, 54d),
- on réalise un évidement (53a) dans la feuille,
- on introduit lors de l'étape a) une zone (53f) de la feuille définissant le pourtour de cet évidement entre les deux éléments de la première partie du moule où la feuille est maintenue.

7. Procédé selon l'une quelconque des revendications précédentes, **caractérisé en ce que** :
- la première partie du moule comprend au moins deux éléments (4b, 4c ; 54b, 54c ; 54b, 54d),
- on introduit lors de l'étape a) une zone (2a; 53e; 53f) de la feuille extérieure à la zone décor entre les deux éléments de la première partie du moule,
- la fermeture du moule lors de l'étape b) n'est que partielle, la fermeture totale du moule étant réalisée lors de l'étape c) et engendrant la découpe de la feuille par pression entre le premier (4b; 54b) et le deuxième élément (4c ; 54c ; 54d) de la première partie du moule.

8. Procédé selon l'une quelconque des revendications précédentes, **caractérisé en ce que** l'on dispose la feuille à l'étape b) entre deux éléments (107a, 107b) d'un dispositif emporte-pièce et lors de l'étape c), on réalise instantanément à travers la feuille une ouverture (102a) en amenant au contact l'un de l'autre les deux éléments du dispositif emporte-pièce.

9. Procédé selon la revendication 8, **caractérisé en ce que** l'on maintient les deux éléments du dispositif emporte-pièce au contact l'un de l'autre jusqu'à l'étape f).

10. Procédé selon l'une quelconque des revendications précédentes, **caractérisé en ce que** le premier volume est situé en regard de la zone décor et qu'après l'étape c), on crée à proximité immédiate de l'ouverture découpée dans la feuille, un effet de tourbillon (32) ou de retenue (38) du flux de la matière injectée dans le premier volume à l'encontre de son déplacement naturel vers la périphérie du deuxième volume pour éviter que l'autre zone de la feuille n'apparaisse sur la face d'aspect.

11. Procédé selon la revendication 5 ou 8, **caractérisé en ce que** préalablement à l'étape c), l'on retient la feuille sur le moule dans une zone de maintien de la feuille extérieure à la zone décor et on découpe continûment la feuille lors de l'étape c) pour séparer la zone décor et la zone de maintien.

12. Procédé selon l'une quelconque des revendications 1 à 10, **caractérisé en ce qu'**à partir de l'étape b), l'on retient la feuille sur le moule dans une zone de maintien de la feuille extérieure à la zone décor et lors de l'étape c) on découpe la feuille de façon discontinue de sorte que la feuille est retenue au moins jusqu'à l'étape f).

13. Procédé selon la revendication 12, **caractérisé en ce qu'**après l'étape c) on retient totalement la zone de maintien de la feuille de sorte que son déplacement est interdit.

## Claims

1. Process for substantially covering with at least one non-rigid decorative foil (2, 53, 102) a visible face (44, 94, 144) of a support part (42, 92) of plastics material(s) (1 ; 51 ; 101) in a mould (4, 54, 104) substantially comprising a first part (4b, 4c ; 54b, 54c, 54d ; 104b) and a second part (4a ; 54a ; 104a) which form a moulding cavity (17 ; 67 ; 117) therebetween, the first mould part comprising also two components (4b, 4c ; 54b, 54c ; 54b, 54d) movable one relative to the other, intended to cut out the decorative foil by coming into contact with each other, so as to obtain a finished part (40 ; 90 ; 140) comprising a decorative inset, the process comprising the following steps:
a) inserting the foil into the mould between said movable components, said foil which comprises a decorative area (2c ; 53g), intended to form the inset, and a further area;
b) closing the mould at least partially by moving its two parts together such that the foil creates a continuous separation of the moulding cavity into a first space (16 ; 66 ; 116) and a second space (18 ; 68, 69 ; 118);
c) bringing said two components into contact with each other in order to cut out inside the moulding cavity at least one aperture in the foil at the location of the further area, such that the first and second spaces of the cavity are placed in fluid communication by this aperture which henceforth interrupts the separation between these two spaces so as to enable the material to pass through this aperture;
d) before and/or after steps b) and/or c), introducing plastics material into the mould cavity;
e) after step c), distributing the material in the moulding cavity by passing it through the aperture in order to obtain the decorative support part locally covered by the inset;
f) cooling the part; and
g) opening the mould and ejecting the finished part.

2. Process according to Claim 1, **characterised in that** during step d), the plastics material is injected under pressure into the moulding cavity.

3. Process according to Claim 2, **characterised in that**:
- during step d) a first injection stage is carried out in which plastics material is injected under pressure opposite one side of the decorative area, such that the decorative area of the foil is brought to bear against one of the mould parts intended to receive it; and
- during step e) the first injection stage is continued so that the plastics material is made to pass through the apertures, and a further pressurized injection process is carried out in which plastics material is injected outside the decorative area.

4. Process according to Claim 3, **characterised in that**, on the injection side, the decorative area (2c) is almost completely coated with plastics material before the foil is cut out during step c).

5. Process according to Claim 3 or Claim 4, **characterised in that** after step c), the injection of material opposite the decorative area and outside the decorative area is controlled such that, during the first and second injection stages, opposing forces are applied by material on either side of the further area, thus preventing its showing on the visible face of the finished part.

6. Process according to any of the preceding Claims, **characterised in that**:
- the first mould part comprises at least two components (54b, 54d);
- a recess (53a) is formed in the foil; and
- during step a), an area (53f) of the foil defining the periphery of this recess is introduced between the two components of the first mould part where the foil is held.

7. Process according to any of the preceding Claims, **characterised in that**:
- the first mould part comprises at least two components (4b, 4c,; 54b, 54c ; 54b, 54d);
- during step a), an area (2a ;53e ; 53f) of the foil outside the decorative area is introduced between the two components of the first mould part; and
- during step b), the mould is only closed partially, the mould being completely closed during step c) and producing the cut-out in the foil by exerting pressure between the first (4b ; 54b) and second (4c ; 54c ; 54d) components of the first mould part.

8. Process according to any of the preceding Claims, **characterised in that**, during step b), the foil is placed between two components (107a, 107b) of a punch device and, during step c), an aperture (102a) is formed instantaneously through the foil by bringing the two components of the punch device into contact with each other.

9. Process according to Claim 8, **characterised in that** the two components of the punch device are held in contact with each other until step f).

10. Process according to any of the preceding Claims, **characterised in that** the first space is located opposite the decorative area; and **in that** after step c), there is created in the immediate vicinity of the aperture cut out in the foil an eddying effect (32) or the flow of material injected into the first space is held back (38) against its natural movement towards the periphery of the second space in order to prevent the further area of the foil showing on the visible face.

11. Process according to Claims 5 or 8, **characterised in that** before step c), the foil is held on the mould in a foil-retention area outside the decorative area and the foil is cut continuously during step c) in order to separate the decorative area and the retention area.

12. Process according to any of Claim 1 to 10, **characterised in that** as from step b), the foil is held on the mould in a foil-retention area outside the decorative area and, during step c), the foil is cut out discontinuously such that the foil is held at least partially until step f).

13. Process according to Claim 12, **characterised in that** after step c), the foil-retention area is held completely such that movement thereof is prevented.

## Patentansprüche

1. Verfahren zum Verkleiden mit mindestens einer nicht steifen Dekorfolie (2, 53, 102) von im wesentlichen einer Ansichtsseite (44, 94, 144) eines Stützteils (42, 92) aus Kunststoffmaterial(ien) (1; 51; 101), in einer Spritzform (4, 54, 104) mit im wesentlichen einem ersten (4b, 4c; 54b, 54c, 54d; 104b) und einem zweiten Teil (4a; 54a; 104a), die zwischen sich einen Formhohlraum (17; 67; 117) freihalten, wobei der erste Teil der Spritzform ebenfalls zwei Elemente (4b, 4c; 54b, 54c; 54b, 54d) aufweist, die bezüglich einander beweglich und dazu bestimmt sind, die Dekorfolie zu schneiden, indem sie miteinander in Kontakt kommen, um ein fertiges Teil (40; 90; 140) zu erhalten, das ein Dekormedaillon aufweist, wobei das Verfahren folgende Schritte aufweist:
a) Einführen der Folie in die Spritzform zwischen die beweglichen Elemente, wobei die Folie einen Dekorbereich (2c; 53g), der für die Bildung des Medaillons bestimmt ist, und einen anderen Bereich aufweist,
b) mindestens teilweises Schließen der Spritzform durch Annähern ihrer zwei Teile derart, daß die Folie eine fortlaufende Trennung des Formhohlraums in ein erstes (16; 66; 116) und ein zweites Volumen (18; 68, 69; 118) erzeugt,
c) das miteinander in Kontaktbringen der zwei Elemente, um im Inneren des Formhohlraums mindestens eine Öffnung in die Folie an der Stelle des anderen Bereichs derart zu schneiden, daß die ersten und zweiten Volumina des Hohlraums in Fließmittelverbindung durch diese Öffnung gebracht werden, welche ihre Trennung von diesem Moment an unterbricht, um den Durchgang des Kunststoffmaterials quer durch sie zu erlauben,
d) Einführen des Kunststoffmaterials in den Formhohlraum vor und/oder nach den Schritten b) und/oder c),
e) Verteilen des Kunststoffmaterials nach dem Schritt c) in dem Formhohlraum, indem man es quer durch die Öffnung hindurchgehen läßt, um das Stützteil mit örtlich verkleideter Ansicht des Medaillons zu erhalten,
f) Abkühlen des Teils,
g) Öffnen der Spritzform und Ausstoßen des fertigen Teils.

2. Verfahren nach Anspruch 1, **dadurch gekennzeichnet, daß** man während des Schrittes d) das Kunststoffmaterial in den Formhohlraum unter Druck einspritzt.

3. Verfahren nach Anspruch 2, **dadurch gekennzeichnet, daß**:
- man während des Schrittes d) ein erstes Einspritzen des Kunststoffmaterials unter Druck gegenüber einer Seite des Dekorbereichs derart durchführt, daß der Dekorbereich der Folie unter Abstützung gegen einen der Teile der Spritzform zugeführt wird, der dazu bestimmt ist, sie aufzunehmen,
- man während des Schrittes e) das erste Einspritzen des Kunststoffmaterials fortsetzt, um das Kunststoffmaterial quer durch die Öffnungen durchgehen zu lassen, und man ein weiteres Einspritzen des Kunststoffmaterials unter Druck außerhalb des Dekorbereichs durchführt.

4. Verfahren nach Anspruch 3, **dadurch gekennzeichnet, daß** der Dekorbereich (2c) auf der Einspritzseite beinahe völlig mit Kunststoffmaterial vor dem Schneiden der Folie während des Schrittes c) bedeckt wird.

5. Verfahren nach Anspruch 3 oder 4, **dadurch gekennzeichnet, daß** man nach dem Schritt c) das Einspritzen gegenüber dem Dekorbereich und außerhalb des Dekorbereichs bis zum Verlauf des ersten und zweiten Injektionsschrittes kontrolliert, damit entgegengesetzte Belastungen durch das Kunststoffmaterial auf beiden Seiten des anderen Bereichs aufgebracht werden, um so zu vermeiden, daß es auf der Ansichtsseite des fertigen Stückes erscheint.

6. Verfahren nach einem der vorhergehenden Ansprüche, **dadurch gekennzeichnet, daß**
- der erste Teil der Spritzform mindestens zwei Elemente (54b, 54d) aufweist,
- man eine Aussparung (53a) in der Folie realisiert,
- man während des Schrittes a) einen Bereich (53f) der Folie, welcher den äußeren Umfang dieser Aussparung bestimmt, zwischen die zwei Elemente des ersten Teils der Spritzform einführt, wo die Folie gehalten wird.

7. Verfahren nach einem der vorhergehenden Ansprüche, **dadurch gekennzeichnet, daß**
- der erste Teil der Spritzform mindestens zwei Elemente (4b, 4c; 54b, 54c; 54b, 54d) aufweist,
- man während des Schrittes a) einen Bereich (2a; 53e; 53f) der Folie außerhalb des Dekorbereichs zwischen die zwei Elemente des ersten Teils der Spritzform einführt,
- das Schließen der Spritzform während des Schrittes b) nur teilweise erfolgt, wobei das völlige Verschließen der Spritzform während des Schrittes c) durchgeführt wird und das Schneiden der Folie durch Druck zwischen dem ersten (4b; 54b) und dem zweiten Element (4c; 54c; 54d) des ersten Teils der Spritzform erzeugt wird.

8. Verfahren nach einem der vorhergehenden Ansprüche, **dadurch gekennzeichnet, daß** man die Folie bei dem Schritt b) zwischen zwei Elementen (107a, 107b) einer Lochstanzvorrichtung anordnet und man während des Schrittes c) sofort quer durch die Folie eine Öffnung (102a) realisiert, indem man die zwei Elemente der Lochstanzvorrichtung in Kontakt bringt.

9. Verfahren nach Anspruch 8, **dadurch gekennzeichnet, daß** man die zwei Elemente der Lochstanzvorrichtung bis zu dem Schritt f) miteinander in Kontakt hält.

10. Verfahren nach einem der vorhergehenden Ansprüche, **dadurch gekennzeichnet, daß** das erste Volumen gegenüber dem Dekorbereich liegt und daß man nach dem Schritt c) in unmittelbarer Nähe der in die Folie geschnittenen Öffnung eine Wirbelwirkung (32) oder eine Rückhaltewirkung (38) des Flusses des eingespritzten Kunststoffmaterials in dem ersten Volumen entgegen seiner natürlichen Verschiebung zu dem Umfang des zweiten Volumens erzeugt, um zu vermeiden, daß der andere Bereich der Folie auf der Ansichtsfläche erscheint.

11. Verfahren nach Anspruch 5 oder 8, **dadurch gekennzeichnet, daß** man vor dem Schritt c) die Folie an der Spritzform in einem Haltebereich der Folie außerhalb des Dekorbereichs zurückhält und fortlaufend die Folie während des Schrittes c) schneidet, um den Dekorbereich und den Haltebereich zu trennen.

12. Verfahren nach einem der Ansprüche 1 bis 10, **dadurch gekennzeichnet, daß** man ausgehend von dem Schritt b) die Folie an der Spritzform in einem Haltebereich der Folie außerhalb des Dekorbereichs zurückhält und man während des Schrittes c) die Folie in unterbrochener Weise derart schneidet, daß die Folie mindestens bis zu dem Schritt f) zurückgehalten wird.

13. Verfahren nach Anspruch 12, **dadurch gekennzeichnet, daß** man nach dem Schritt c) den Haltebereich der Folie völlig derart zurückhält, daß ihre Verschiebung untersagt wird.
